Europäisches Patentamt

European Patent Office

Office européen des brevets

(19)

(11) **EP 0 884 395 A1**

(12) **EUROPÄISCHE PATENTANMELDUNG**

(43) Veröffentlichungstag:
    **16.12.1998 Patentblatt 1998/51**

(51) Int. Cl.⁶: $C21C\ 7/00$, $C21C\ 7/076$, $B22D\ 11/10$

(21) Anmeldenummer: **98110677.6**

(22) Anmeldetag: **10.06.1998**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **12.06.1997 DE 19724913**

(71) Anmelder: **ALMAMET GmbH**
    **83404 Ainring (DE)**

(72) Erfinder:
    • **Rhomberg, Alexander L.**
      **5020 Salzburg (AT)**

• **Sittard, Matthias, Dr.**
  **46325 Borken (DE)**
• **Freissmuth, Alfred, Dr.**
  **83355 Grabenstätt/Bergen (DE)**

(74) Vertreter:
    **Finsterwald, Manfred et al**
    **Patentanwälte,**
    **Manitz, Finsterwald & Partner GbR,**
    **Robert-Koch-Strasse 1**
    **80538 München (DE)**

(54) **Mittel zur fluorfreien Behandlung von Stahlschmelzen in der Giesspfanne, Verfahren zu seiner Herstellung und seine Verwendung**

(57)    Es wird ein Mittel zur fluorfreien Behandlung von Stahlschmelzen in der Gießpfanne vorgeschlagen, das technisches Calciumcarbid und mindestens ein tonerdehaltiges Material enthält. Zur Herstellung dieses Mittels wird das tonerdehaltige Material in Granulatform flüssigem Calciumcarbid zugesetzt und nach der Verfestigung der Mischung auf die gewünschte Korngröße zerkleinert. In dieser Form wird es der Stahlschmelze nach ihrem Abstich in die Gießpfanne zugesetzt.

EP 0 884 395 A1

**Beschreibung**

Die vorliegende Erfindung betrifft ein Mittel zur fluorfreien Behandlung von Stahlschmelzen in der Gießpfanne, ein Verfahren zu seiner Herstellung sowie seine Verwendung.

Bei der Stahlherstellung erfolgen Zugaben von Kalk, Desoxidations- und Legierungsmitteln, wie Aluminium, Silicomangan, Ferrosilicium und Ferromangan, beim Abstich der Stahlschmelze aus dem Konverter oder Elektroofen in die Gießpfanne. Aus mitgelaufener Schlacke, diesen Zuschlägen und den aus ihnen entstandenen Reaktiosprodukten bildet sich in der Gießpfanne eine Schlacke auf der Stahlschmelze. Bei der Behandlung der Stahlschmelze in der Gießpfanne muß diese Schlacke nicht nur schnell verflüssigt werden, sondern sie muß auch ausreichend desoxidiert werden, um eine wirksame Nachentschwefelung der Stahlschmelze zu erzielen. Ferner ist dazu eine bestimmte Mindestbasizität erforderlich.

Um eine schnelle Verflüssigung der Schlacke zu erreichen, wird nach wie vor dem Kalk, der während des Abstichs der Stahlschmelze zugesetzt wird, Calciumfluorid in Mengen von 5 bis 30 Gewichtsprozent zugegeben. Dadurch wird die technische Kalksättigung der Pfannenschlacke zu Werten größer 1 verschoben, so daß der Teil des Kalks, der sonst wegen Übersättigung der Schlacke nicht gelöst wurde, verflüssigt und damit metallurgisch wirksam wird. Diese Arbeitsweise hat den Nachteil, daß die resultierende Pfannenschlacke die feuerfeste Auskleidung der Gießpfanne angreift und daß Probleme bei der späteren Deponierung der Schlacke entstehen. Daher ist man in einigen Fällen dazu übergegangen, Bauxit mit einem möglichst hohen Tonerdegehalt zuzusetzen.

Die anschließende Reduktion der Pfannenschlacke nach dem Ende des Abstichvorgangs wird in der Regel mit Aluminiumgranulat oder anderen wirksamen sauerstoffaffinen Metallen oder Legierungen durchgeführt, die auf die Schlacke aufgegeben werden.

Dabei entstehen weitere feste oder flüssige Reaktionsprodukte, die von der Pfannenschlacke aufgenommen werden müssen. In einigen Fällen wird zu diesem Zweck auch reines Calciumcarbid in Granulat- oder Staubform zugegeben, wobei dann zusätzlich ein Aufschäumen der Schlacke stattfindet, da ein Teil der Reaktionsprodukte gasförmig ist.

Durch die Reduktion der Anteile an Eisen- und Manganoxiden, die eine verflüssigende Wirkung auf die Schlacke haben, neigt die Schlacke bei der Behandlung in der Gießpfanne wieder zu einer Versteifung, der durch erneute Zugabe verflüssigender Zusätze entgegengewirkt werden muß. Diese Arbeitsweise ist aufwendig, erfordert eine intensive Kontrolle der Behandlung durch das Personal und setzt eine stetige Verfolgung der Veränderungen der Zusammensetzung der Schlacke durch kostenintensive Probenentnahme voraus.

Aufgabe der vorliegenden Erfindung ist die Bereitstellung eines Mittels zur fluorfreien Behandlung von Stahlschmelzen in der Gießpfanne, das die Pfannenschlacke schnell verflüssigt und gleichzeitig die darin enthaltende Oxide, insbesondere Eisen- und Manganoxide, reduziert, um eine wirksame Nachentschwefelung der Stahlschmelze in der Gießpfanne zu erreichen. Außerdem soll das Mittel die Schlacke aufschäumen, um so den Wärmeübergang zu verbessern und den Angriff auf die feuerfeste Auskleidung der Gießpfanne durch Lichtbogen und durch die Schlacke zu verringern.

Diese Aufgabe wird durch ein Mittel zur fluorfreien Behandlung von Stahlschmelzen in der Gießpfanne gelöst, das technisches Calciumcarbid und mindestens ein tonerdehaltiges Material enthält.

Unter Gießpfanne ist hier sowohl die Pfanne zu verstehen, bei der keine Wärme der Stahlschmelze zugeführt wird, als auch die Pfanne, sog. Pfannenofen, bei der der Stahlschmelze Wärme zugeführt wird, zum Beispiel durch den Lichtbogen zwischen Elektroden.

Unter technischem Calciumcarbid ist ein handelsübliches Produkt zu verstehen, das 65 bis 85 Gewichtsprozent $CaC_2$ und als Rest überwiegend Kalk enthält.

Unter tonerdehaltigen Materialien sind Materialien zu verstehen, die Aluminiumoxid, Aluminiummetahydroxid und/oder Aluminiumhydroxid enthalten. Als tonerdehaltige Materialien können Tonerde, Bauxit vorzugsweise mit hohem Tonerdegehalt, Calciumaluminate, Natriumaluminiumsilicate und Tonerde-Regenerate aus tonerdereichen feuerfesten Produkten und ähnliches verwendet werden.

Der Gehalt an tonerdehaltigem Material in dem erfindungsgemäßen Mittel liegt im allgemeinen zwischen 5 und 50 Gewichtsprozent. Die Menge des tonerdehaltigen Materials in dem Mittel richtet sich nach dem Tonerdegehalt in dem Material und nach den metallurgischen Randbedingungen, zum Beispiel nach der Menge des beim Abstich zugesetzten Kalks. Bei tonerdereichen Materialien kann der Gehalt dieses Materials in dem Mittel geringer sein als bei tonerdeärmeren Materialien. Bevorzugt wird innnerhalb des oben genannten Bereichs eine solche Menge gewählt, daß das Mittel 20 bis 30 Gewichtsprozent Tonerde enthält. Bei Natriumaluminaten wird die Menge so gewählt, daß das Mittel 20 bis 30 Gewichtsprozent Tonerde und Natriumoxid enthält.

Vorzugsweise liegt das erfindungsgemäße Mittel in Granulatform vor. Die Granulatkörner haben im allgemeinen Korngrößen bis 50 mm. Die gewählte Korngröße richtet sich nach den Behandlungszeiten der Stahlschmelze in der Gießpfanne. Je länger die Behandlungszeit ist, desto größere Korngrößen werden verwendet. Bei kurzen Behandlungszeiten liegen die Korngrößen vorzugsweise im Bereich von 5 bis 15 mm, bei mittleren Behandlungszeiten vorzugsweise im Bereich von 15 bis 25 mm und bei langen Behandlungszeiten vorzugsweise im Bereich von 25 bis 50 mm.

Vorzugsweise liegen das technische Calciumcarbid und das tonerdehaltige Material in dem erfindungsgemäßen Mittel innig miteinander vermischt vor. Zur Herstellung dieses Mittels können vorgebrochenes technisches Calciumcarbid und tonerdehaltiges Material miteinander gemischt und in einer Mühle auf die gewünschte Korngröße zerkleinert werden.

Besonders bevorzugt ist ein Mittel mit einer besonders homogenen Verteilung von technischem Calciumcarbid und tonerdehaltigem Material im Granulat. Zur Herstellung dieses Mittels wird ein Granulat des tonerdehaltigen Materials dem flüssigen Calciumcarbid direkt bei dessen Herstellung zugesetzt. Nach der Verfestigung der Mischung wird sie auf die gewünschte Korngröße zerkleinert. Das tonerdehaltige Material wird im allgemeinen mit Korngrößen bis zu 30 mm, vorzugsweise mit Korngrößen im Bereich von 3 bis 15 mm, dem flüssigen Calciumcarbid zugesetzt.

Bei diesem Herstellungsverfahren erreicht man eine besonders homogene Verteilung von Calciumcarbid und tonerdehaltigem Material im Granulat durch Aufschmelzvorgänge im Bereich der Phasengrenze von flüssigem Calciumcarbid und festem tonerdehaltigen Material. Man erreicht eine Umhüllung der Körner des tonerdehaltigen Materials mit Calciumcarbid. Das so hergestellte Mittel wird bei der Zugabe zur Stahlschmelze in der Gießpfanne schneller aufgeschmolzen.

Bei beiden Herstellungsverfahren wird vorzugsweise das tonerdehaltige Material in Form eines vorgesinterten oder vorgeschmolzenen Granulats verwendet.

Das erfindungsgemäße Mittel ermöglicht eine Verflüssigung der Schlacke während der gesamten Behandlungszeit und gleichzeitig eine schnelle Reduktion der Schlacke und als Folge auch eine Herabsetzung des Sauerstoffpotentials der Stahlschmelze. Dadurch werden die Bedingungen für eine wirksame Entschwefelung der Stahlschmelze geschaffen.

Durch das erfindungsgemäße Mittel wird eine reaktionsfähige und kalkreiche Schlacke gebildet. Weitere Zugaben von Mitteln zur Verflüssigung der Schlacke während der Behandlung der Stahlschmelze in der Gießpfanne sind nicht erforderlich, da auch nach einer Verarmung der Pfannenschlacke an Eisen- und Manganoxiden der Grad der Verflüssigung der Schlacke gehalten wird. Dies ist für den Ablauf der Entschwefelung eine unabdingbare Voraussetzung.

Durch die bei der Reduktion der Pfannenschlacke entstehenden gasförmigen Reaktionsprodukte wird die Schlacke aufgeschäumt, wodurch ein guter Wärmeübergang erzielt und die Beanspruchung der feuerfesten Auskleidung der Gießpfanne verringert wird. Ferner liegen gute Wärmeisolationseigenschaften am Ende der Behandlung vor.

Da das Mittel fluorfrei ist, wird das feuerfeste Material der Gießpfanne weniger angegriffen und Probleme bei der Deponierung der Schlacke vermieden.

Wesentlich für das Erreichen der eben genannten Vorteile ist, daß durch das erfindungsgemäße Mittel erstmals gleichzeitig technisches Calciumcarbid und tonerdehaltiges Material der Stahlschmelze nach Abschluß des Abstichvorgangs zugesetzt werden. Die Funktion des Calciumcarbids als Reduktionsmittel und Schäumhilfsmittel war zwar bekannt. Diese Wirkungen können aber nur dann wirksam ausgenutzt werden, wenn gleichzeitig für eine gute Verflüssigung der Pfannenschlacke während der gesamten Behandlung gesorgt wird. Im einzelnen laufen folgende Vorgänge bei der Zugabe des erfindungsgemäßen Mittels zur Stahlschmelze ab. Die Tonerde sorgt für eine Verflüssigung der Schlacke. Das Calciumcarbid reduziert die Eisen- und Manganoxide und in einem geringerem Ausmaß Siliciumoxid. Dabei entstehen Calciumoxid, Kohlenmonoxid sowie die Metalle in exothermer Reaktion.

Durch die Bildung von Calciumoxid wird dessen Gehalt in der Schlacke erhöht, gleichzeitig der Siliciumoxidgehalt erniedrigt und damit die Zusammensetzung der Schlacke in Richtung auf die Kalksättigungslinie des Dreistoffsystems $CaO$-$Al_2O_3$-$SiO_2$ verändert. Die Tonerde des erfindungsgemäßen Mittels verhindert eine Übersättigung der Schlacke an Calciumoxid und damit einen Verlust an Entschwefelungspotential.

Die Reduktion der genannten Oxide durch das Calciumcarbid bewirkt eine Herabsetzung des Oxidationsportentials der Schlacke und damit günstige Voraussetzungen für die Entschwefelung der Stahlschmelze nach der Gleichung

$$(CaO) + [S] = (CaS) + [O]$$

Die Entfernung des freigesetzten Sauerstoffs erfolgt durch Reaktion mit dem im technischen Calciumcarbid des erfindungsgemäßen Mittels enthaltenen Kohlenstoff an der Phasengrenze von Metall und Schlacke sowie durch Reaktion mit den im Stahl gelösten Elementen Silicium, Aluminium, Titan und/oder Calcium.

Durch die Bildung des Kohlenmonoxids bei der Reaktion des Calciumcarbids mit den genannten Oxiden wird die Schlacke aufgeschäumt mit den damit bereits genannten Wirkungen.

Schließlich sorgt die freigesetzte Wärme bei der Reduktion der genannten Oxide durch das Calciumcarbid sowie bei der Reaktion der oben genannten Elemente mit dem bei der Entschwefelung freigesetzten Sauerstoff für die Bildung weiterer Teile an reaktionsfähiger flüssiger Schlacke.

Wie eingangs bereits erwähnt, wird ein Teil der Schlacke beim Abstich der Stahlschmelze in die Gießpfanne mitgezogen. Ferner erfolgen Zusätze beim Abstich der Stahlschmelze in die Gießpfanne. Zu Beginn der Behandlung in der Gießpfanne liegt eine Schlacke vor, die in ihren Grundkomponenten dem System Calciumoxid-Aluminiumoxid-Siliciumoxid genügt. Der Stahlschmelze mit dieser Schlacke wird nach Beendigung des Abstichvorgangs in die Gießpfanne das erfindungsgemäße Mittel zugesetzt.

Besonders geeignet ist das erfindungsgemäße Mittel zur Behandlung von Stahlschmelzen, die zur Herstellung von Stählen mit vorgegebenen minimalen Aluminiumgehalten bestimmt sind. Bei diesen Stahlschmelzen wird im Konverter zur Reduktion der Oxide im Stahl kein Aluminium verwendet, sondern andere weniger reaktionsfähige Reduktionsmittel, wie zum Beispiel Ferromangan oder Ferrosilicium. Daher weist die Stahlschmelze einen höheren Gehalt an Oxiden auf, was eine schlechtere Entschwefelung in der Gießpfanne zur Folge hat. Dies wird erfindungsgemäß verhindert.

Der Verfahrensablauf mit Verwendung des erfindungsgemäßen Mittels wird im folgenden durch ein Beispiel näher beschrieben.

Während des Abstichs des Rohstahls aus dem Konverter oder Elektroofen wird eine bestimmte Menge an Legierungen (Silicomangan, Ferromangan und/oder Ferrosilicium), Kalk und Aluminiumoxid der Stahlschmelze zugesetzt. Zusätzlich läuft eine von Abstich zu Abstich wechselnde Menge an Ofenschlacke aus dem Konverter oder Elektroofen mit.

Zu Beginn der Behandlung im Pfannenofen liegt folglich eine Schlacke vor, die in ihrer Zusammensetzung durch das Dreistoffsystem Calciumoxid-Aluminiumoxid-Siliciumoxid beschrieben werden kann mit weiteren Komponenten in Form von Eisen- und Manganoxiden. Mit Beginn der Heizbehandlung im Pfannenofen wird bei wirksamer Pfannenspülung das erfindungsgemäße Mittel in Granulatform zugegeben.

Bei einem Pfannenofen mit mittlerer Behandlungszeit lagen die Korngrößen des erfindungsgemäßen Mittels im Bereich von 15 bis 25 mm. Das erfindungsgemäße Mittel bestand aus 30 Gew.-% Bauxit mit einem Tonerdegehalt von ca. 75 Gew.-% und 70 Gew.-% Calciumcarbid. Das Mittel war hergestellt worden, indem vorgesintertes Bauxitgranulat mit Korngrößen im Bereich von 3 bis 15 mm dem flüssigen Calciumcarbid bei dessen Herstellung zugesetzt wurde. Dieses erfindungsgemäße Mittel wurde in Mengen von 0,35 bis 1,0 kg/t Stahl am Pfannenofen von oben auf die Schlakkenschicht zugegeben, was einer Zugabe von 0,035 bis 0,100 Gew.-%, bezogen auf die Stahlschmelze, entspricht. Es wurden die in der folgenden Tabelle angegebenen Mengen an erfindungsgemäßem Mittel zugegeben.

Die spezifische Schlackenmenge lag bei ca. 10-12 kg/t Stahl nach dem Abstich, wobei während des Abstichs bei allen drei Schmelzen 1000 kg Kalk und 300 kg Bauxil sowie unterschied liche Mengen an Ferrosilicium sowie Silicomangan zugegeben worden waren.

Die Entwicklung der Schwefelgehalte vom Abstich bis zur Stranggießanlage ist folgender Tabelle zu entnehmen.

### Tabelle

| Schmelze | A | B | C | Ort der Analyse |
|---|---|---|---|---|
| % S Abstich | 0,078 | 0,112 | 0,060 | Elektroofen |
| kg zugegebenes erfindungsgemäßes Mittel | 80 | 110 | 150 | |
| % S nach 5 min | 0,062 | 0,069 | 0,047 | Pfannenofen |
| % S nach 25 min | 0,038 | 0,035 | 0,030 | Pfannenofen |
| % S nach 25 min Gießzeit | 0,027 | 0,026 | 0,022 | Verteiler der Stranggießanlage |

Bei allen Schmelzen wurde gegen Ende der Behandlung im Pfannenofen noch zusätzlich CaSi-Draht eingespult.

## Patentansprüche

1. Mittel zur fluorfreien Behandlung von Stahlschmelzen in der Gießpfanne, das technisches Calciumcarbid und mindestens ein tonerdehaltiges Material enthält.

2. Mittel nach Anspruch 1, das 5 bis 50 Gewichtsprozent, insbesondere 20 bis 30 Gewichtsprozent, tonerdehaltiges Material enthält.

3. Mittel nach Anspruch 1 oder 2, das als tonerdehaltiges Material Bauxit und/oder Tonerde-Regenerate aus tonerdereichen feuerfesten Produkten und/oder Natriumaluminiumsilicate in homogener Verteilung enthält.

4. Mittel nach einem der Ansprüche 1 bis 3, das in Form eines Granulats vorliegt, insbesondere mit Korngrößen bis 50 mm.

5. Verfahren zur Herstellung des Mittels nach einem der Ansprüche 1 bis 4, dadurch gekennzeichnet, daß das tonerdehaltige Material in Granulatform flüssigem Calciumcarbid zugesetzt wird und nach der Verfestigung die Mischung auf die gewünschte Korngröße zerkleinert wird.

6. Verfahren nach Anspruch 5, bei dem das tonerdehaltige Material in Form eines vorgesinterten oder vorgeschmolzenen Granulats zugesetzt wird.

7. Verfahren nach Anspruch 5 oder 6, bei dem das tonerdehaltige Granulat Korngrößen bis 30 mm, insbesondere Korngrößen im Bereich von 3 bis 15 mm, aufweist.

8. Verwendung des Mittels nach einem der Ansprüche 1 bis 4 zur fluorfreien Behandlung von Stahlschmelzen in der Gießpfanne, die zu Beginn der Behandlung Schlacken des Typs Calciumoxid-Aluminiumoxid-Siliciumoxid aufweisen und denen das Mittel nach ihrem Abstich in die Gießpfanne zugesetzt wird.

9. Verwendung nach Anspruch 8, bei der das den Stahlschmelzen zugesetzte Mittel nach einem der Ansprüche 5 bis 7 hergestellt ist.

**Europäisches Patentamt**

# EUROPÄISCHER RECHERCHENBERICHT

Nummer der Anmeldung

EP 98 11 0677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 127, no. 2, 14. Juli 1997 Columbus, Ohio, US; abstract no. 21420, YAMAGUCHI, KIMIHARU: "Process and fluxes for denitrification of molten metals" XP002077752 * Zusammenfassung * & JP 09 078119 A (KAWASAKI STEEL CORP., JAPAN) 25. März 1997 --- | 1,2 | C21C7/00 C21C7/076 B22D11/10 |
| X | WO 91 15604 A (TAM CERAMICS INC) 17. Oktober 1991 * Zusammenfassung; Ansprüche 20,24 * --- | 1 | |
| A | WO 94 19496 A (LAPORTE GROUP AUSTRALIA ;MARIC MILENA (AU); PYE ERIC (AU)) 1. September 1994 --- | | |
| X,P | CHEMICAL ABSTRACTS, vol. 127, no. 11, 15. September 1997 Columbus, Ohio, US; abstract no. 151426, YAMAGUCHI, KIMIHARU ET AL: "Denitridation of molten metals" XP002077753 * Zusammenfassung * & JP 09 165615 A (KAWASAKI STEEL CORP., JAPAN;SUITO, HIDEAKI) ----- | 1 | RECHERCHIERTE SACHGEBIETE (Int.Cl.6)  C21C B22D |

Der vorliegende Recherchenbericht wurde für alle Patentansprüche erstellt

| Recherchenort | Abschlußdatum der Recherche | Prüfer |
|---|---|---|
| DEN HAAG | 16. September 1998 | Oberwalleney, R |

EPO FORM 1503 03.82 (P04C03)